# EUROPÄISCHE PATENTSCHRIFT

(11) **EP 1 541 990 B1**
(45) Veröffentlichungstag und Bekanntmachung des Hinweises auf die Patenterteilung: **28.04.2010**
(21) Anmeldenummer: 04106474.2
(22) Anmeldetag: 10.12.2004
(51) Int. Cl.: G01N 21/03

(54) **Verfahren und Vorrichtung zur Untersuchung von Gasen oder Gasgemischen mittels Laserdiodenspektroskopie**
Method and apparatus for gas or gas mixture analysis by means of laser diode spectroscopy
Procédé et dispositif pour l'analyse des gaz ou un melange gazeux par spectroscopie à diode laser

(30) Priorität: 12.12.2003 DE 10360111
(43) Veröffentlichungstag der Anmeldung: 15.06.2005
(73) Patentinhaber: Fraunhofer-Gesellschaft zur Förderung der angewandten Forschung e.V., 80686 München (DE)
(72) Erfinder: Mäder, Gerrit, 01187, Dresden (DE); Grählert, Wulf, 01277, Dresden (DE); Hopfe, Volkmar, 01814, Kleingiesshübel (DE); Beese, Harald, 01683, Nossen (DE); Hofmüller, Eckehard, 29413, Diesdorf (DE)
(74) Vertreter: Rauschenbach, Marion

(56) Entgegenhaltungen:
- DE-A1- 2 723 939
- DE-A1- 10 216 047
- DE-A1- 19 526 943
- DE-B1- 2 937 352
- PATENT ABSTRACTS OF JAPAN Bd. 012, Nr. 266 (P-735), 26. Juli 1988 (1988-07-26) & JP 63 050739 A (SANYO ELECTRIC CO LTD), 3. März 1988 (1988-03-03)
- PATENT ABSTRACTS OF JAPAN Bd. 012, Nr. 401 (P-776), 25. Oktober 1988 (1988-10-25) & JP 63 140941 A (HITACHI LTD), 13. Juni 1988 (1988-06-13)

## Beschreibung

Die Erfindung bezieht sich auf die Gebiete der Physik und des Messgerätebaus und betrifft ein Verfahren und ein Vorrichtung zur Untersuchung von Gasen oder Gasgemischen mittels Laserdiodenspektroskopie, mit deren Hilfe beispielsweise die Gaskonzentration in Lampenkörpern, Flaschen, Rohrleitungen oder Ampullen ermittelt werden kann.

Bekannt sind verschiedene Lösungen zur optischen Untersuchung von Gasen. Nach der DE 101 24 055 A1 ist ein derartiges Gerät bekannt, welches aus einer Lichtquelle, einem Detektor und einer Küvette besteht, wobei die Küvette mit wenigstens einem Fenster und mit mehrerem reflektierenden, sphärischen, Hohlspiegeln rotationssymmetrisch um die Mittelachse der Küvette im Inneren angeordnet, ausgestattet ist. In der Küvette befindet sich das zu untersuchende Gas. Durch das Fenster in der Küvette wird ein gebündelter Lichtstrahl so auf einen der Hohlspiegel gesandt und dass sein Reflektionsstrahl im Zentrum eines zweiten Hohlspiegels fokussiert wird. Mindestens einer der von diesem fokussierten Reflektionsstrahl auf den weiteren Hohlspiegeln reflektierten Stahle tritt durch das Fenster wieder aus und trifft dort auf einen Detektor, der ein Messsignal erzeugt.

Eine derartige Messanordnung ist relativ kompliziert aufgebaut und nicht für abgeschlossene zu untersuchende Gasräume geeignet.

Weiterhin bekannt ist ein Verfahren zur Miniaturisierung eines Polarimeters zur Analyse niedrig konzentrierter Komponenten im flüssigen Messgut auf optischer Basis sowie eine Vorrichtung zur Durchführung des Verfahrens (DE 198 15 932 C2). Bei diesem Verfahren wird der optische Messstrahl mehrfach durch das Messgut geleitet, wobei bei jeder notwendigen Richtungsänderung des Strahls der Polarisationszustand sowie die Orientierung der Hauptachse erhalten bleibt. Dabei wird ein Lichtstrahl in die Kammer mit dem flüssigen Messgut geleitet, der aus der Kammer austritt, auf ein Prisma trifft, dort zuerst um 90° und dann um weitere 90° umgelenkt und wieder durch die Messkammer geleitet wird. Auf der anderen Seite der Messkammer befindet sich ebenfalls ein Prisma, welches den Lichtstrahl wiederum um insgesamt 180° umlenkt und wieder durch die Messkammer sendet. Durch die Messkammer laufen die Lichtstrahlen in jedem Fall parallel zueinander.

Auch hier ist der Aufbau der Anordnung relativ kompliziert, ist nur für flüssiges Messgut ausgelegt und erfordert das Messgut in der Messkammer, wobei die Messkammer mindestens gegenüber den Prismen die lineare Ausrichtung des Lichtstrahls beim Durchtritt durch die Kammerwandung gewährleistet sein muss.

Es ist weiterhin eine Vorrichtung bekannt, die den mehrfachen Durchtritt eines Lichtstrahls durch die Vorrichtung zur Beleuchtung gewährleistet (US 2002/0057432 A1).

Und eine weitere Vorrichtung zur Gasanalyse ist nach der US 4,410,271 bekannt. Danach besteht die Mehrfachreflektionszelle nach Raman aus zwei sphärischen Spiegeln, die planparallel zueinander ausgerichtet sind und unterschiedliche Krümmungsradien aufweisen. Dabei ist das Zentrum der Spiegel auf die optische Achse der Zelle ausgerichtet. Weiterhin hat der Spiegel mit dem geringeren Krümmungsradius im Zentrum einen Durchgang, hinter dem sich ein Dektektor befindet.

Zwischen den Spiegeln befindet sich das Gas und es wird zwischen den Spiegeln in einem Winkel von 90° zur optischen Achse der Spiegel ein Laserstrahl durch das Gas geleitet. Die entstehende fluoriszierende Strahlung wird durch zahlreiche

Reflexionen in den Spiegeln gesammelt und durch die Öffnung in dem einen Spiegel auf den Detektor geleitet.

Auch hier ist von Nachteil, dass die Anordnung sehr aufwendig und genau justiert sein muss und weiterhin abgeschlossene Gasvolumina nicht untersucht werden können.

Weiterhin bekannt ist aus WO 00/03227 eine In-line-Zelle für die Absorptionsspektroskopie. Dies Zelle besteht aus einer Probenregion, aus einem Lichteintritts- und -austrittsbereich, die gleiche oder verschiedene Bereiche sein können, und in denen ein Lichttransmissionsfenster vorhanden ist, aus einem Spiegel und einen Heizer, der das Lichttransmissionsfenster erwärmt.

Der Nachteil dieser Lösung besteht darin, dass das zu untersuchende Gas in direktem Kontakt mit dem Lichttransmissionsfenster steht, dass überhaupt derartige Lichttransmissionsfenster verwendet werden müssen und dass nur relativ große Probemengen an Gas untersucht werden können.

Ein weiteres Verfahren und eine weitere Vorrichtung sind in DE2937352 B1 offenbart.

Die Aufgabe der erfindungsgemäßen Lösung besteht in der Angabe einer Vorrichtung zur Ermittlung der Konzentration von Gasen, die einfach aufgebaut ist und deren Elemente nicht in direkten Kontakt mit den zu untersuchenden Gasen oder Gasgemischen im Messobjekt treten und weiterhin in einem Verfahren, das einfach handhabbar ist.

Die Aufgabe wird durch die in den unabhängigen Ansprüchen 1 und 6 angegebene Erfindung gelöst. Weiterbildungen sind Gegenstand der Unteransprüche.

Vorteilhafterweise werden ein oder mehrere Laserstrahlen mit einer Bandbreite der Frequenz zwischen 0,6 µm und 2,5 µm eingesetzt.

Ebenfalls vorteilhafterweise wird ein langer optischer Weg des oder der reflektierten Laserstrahlen durch das Gas oder Gasgemisch eingestellt.

Weiterhin vorteilhafterweise werden der oder die aus der Vorrichtung austretenden Laserstrahlen in ein Spektrometer geführt, in dem der Laserstrahl gemessen und die Messwerte zur Auswertung weitergeleitet werden.

Es ist auch vorteilhaft, wenn ein rechtwinkliges Auftreffen des oder der Laserstrahlen auf die Oberflächen des Messobjektes realisiert wird.

Vorteilhafterweise sind der oder die Laserstrahlen aus einem Frequenzbereich zwischen 0,6 µm und 2,5 µm ausgewählt.

Erfindungsgemäß ist die Laserlichtquelle eine Laserdiode.

Von Vorteil ist auch, wenn mindestens der Reflexionsbereich der Parabolspiegel aus Kupfer oder Gold besteht oder damit beschichtet ist.

Ebenfalls von Vorteil ist es, wenn die Parabolspiegel zur Einkopplung des oder der Laserstrahlen an einem Ende länger ausgebildet sind und/oder eine oder mehrere Durchbohrungen aufweisen, wobei vorteilhafterweise die Einkopplung des oder der Laserstrahlen mittels Durchbohrungen im äußeren Parabolspiegelbereich oder nahe dem Messobjektbereich realisiert ist.

Und auch von Vorteil ist es, wenn der Parabolspiegel mit der größeren Brennweite an einem Ende länger ausgebildet ist oder der Parabolspiegel mit der größeren Brennweite die Durchbohrung oder Durchbohrungen im inneren Spiegelbereich nahe dem Messobjektbereich aufweist.

Weiterhin von Vorteil ist es, wenn der Parabolspiegel mit der kleineren Brennweite die Durchbohrung oder Durchbohrungen im äußeren Bereich aufweist.

Vorteilhaft ist es auch, wenn die Abweichung der Brennweiten der mindestens zwei Parabolspiegel im Bereich von 0,1 bis 50 mm liegt.

Es ist auch vorteilhaft, wenn die Auslenkung des oder der Laserstrahlen aus dem Bereich zwischen den Parabolspiegeln durch einen oder mehrere weitere Spiegel oder durch ein oder mehrere Löcher im äußeren Bereich der Parabolspiegel oder im Bereich nahe dem Messobjekt realisiert ist.

Eine weitere vorteilhafte Ausgestaltung der Erfindung besteht darin, wenn das Messobjekt aus Glas oder Kunststoff besteht, und/oder ein rechtwinkliges Auftreffen des oder der Laserstrahlen auf die Messobjektoberfläche realisiert ist.

Erfindungsgemäß ist der Brennpunkt der mindestens zwei Parabolspiegel innerhalb des Gases oder Gasgemisches im Messobjekt angeordnet.

Weiterhin vorteilhaft ist es, wenn der Messwertaufnehmer ein Spektrometer ist.

Die mit dem erfindungsgemäßen Verfahren und der erfindungsgemäßen Vorrichtung ermittelten Ergebnisse werden insbesondere dadurch erhalten und sind reproduzierbar, dass der bei einem einmaligen Lichtdurchgang des oder der Laserstrahlen durch das Messobjekt kurze optische Weg durch den nunmehrigen Mehrfachdurchgang zu einem vergleichsweise großen optischen Weg verlängert wird. Dadurch müssen auch keine sehr hohen Anforderungen an die Qualität und Ausführung der Vorrichtung und seiner Komponenten gestellt werden.

Mit der erfindungsgemäßen Lösung können Untersuchungen an Gasen oder Gasgemischen durchgeführt und insbesondere die Konzentration eines oder mehrerer berührungslos und nichtinvasiv ermittelt werden. Mit dem erfindungsgemäßen Verfahren und der Vorrichtung können laufende Prozesse bezüglich einer Gaskonzentration überwacht werden. Das Verfahren und die Vorrichtung sind beispielsweise bei der Qualitätskontrolle von Halogen- oder anderen gasgefüllten Lampen mit Erfolg einsetzbar. Dabei kann in Abhängigkeit des Einsatzes des jeweiligen Laserlichtes mit einem schmalen Frequenzbereich die Konzentration des jeweils zu untersuchenden Gases oder Gasgemisches ermittelt werden. Durch das erfindungsgemäße Verfahren können auch vergleichsweise geringe Gaskonzentration bis in den ppm-Bereich mit relativ großer Genauigkeit ermittelt werden. Ein großer Vorteil der erfindungsgemäßen Lösung besteht dabei darin, dass die Konzentrationmessungen auch bei vergleichsweise großen Toleranzbereichen in der Position, Größe und/oder Form des Messobjektes reproduzierbare Ergebnisse aufzeigen.

Ebenfalls ist mit dem erfindungsgemäßen Verfahren erstmals die Konzentrationsmessung von Gasen oder Gasgemischen in abgeschlossenen Messobjekten möglich. Vorteilhaft ist auch, dass in einem anderen Anwendungsfall das Gas oder Gasgemisch ausschließlich das Messobjekt durchströmt und auch hier mit der erfindungsgemäßen Vorrichtung nicht in direkten Kontakt treten muss.

Die Funktionsweise der erfindungsgemäßen Vorrichtung ist folgende.

Ein Lichtstrahl mit einer schmalen Bandbreite der Frequenz wird auf einen Parabolspiegel geführt. Dabei ist im Brennpunkt dieses und auch des gegenüberliegenden Parabolspiegels das Messobjekt angeordnet. Der Lichtstrahl wird vom ersten Parabolspiegel durch das mit Gas oder einem Gasgemisch gefüllte Messobjekt geleitet. Dabei ist zu beachten, dass im Falle von Einbauten im Messobjekt, diese dann nicht im Strahlengang liegen dürfen. Weiterhin muss sich der Brennpunkt der mindestens beiden Parabolspiegel im Inneren des Messobjektes im Bereich des Gases oder Gasgemisches befinden. Der Lichtstrahl trifft dann auf den gegenüberliegenden Parabolspiegel und wird auf den ersten Parabolspiegel zurückgeführt. Diese Reflexionen zwischen den Spiegeln werden so oft wie möglich realisiert und enden erst dann, wenn der Lichtstahl ausgelenkt wird oder außerhalb des Bereiches der Parabolspiegel liegt und zu einem Messwertaufnehmer geführt wird. Dabei ist weiterhin zu beachten, dass je geringer die Unterschiede in den Brennweiten der Parabolspiegel sind, umso länger der optische Weg des Lichtstrahls zwischen den Parabolspiegeln wird. Je länger der realisierte optische Weg ist, umso genauer ist die Konzentration ermittelbar bzw. umso geringere Konzentrationen sind nachweisbar. Zu berücksichtigen ist dabei aber auch, dass der Abstand der reflektierten Lichtstrahlen zueinander mindestens so groß sein muss, dass die Auskopplung des Lichtstrahls aus dem Bereich zwischen den Parabolspiegeln noch möglich ist.

Der Lichtstrahl wird nach der Auskopplung zu einem Messwertaufnehmer, beispielsweise einem Spektrometer geführt, in dem die Abschwächung der Laserstrahlintensität gemessen wird und daraus - unter Verwendung der tatsächlich verwendeten optischen Schichtdicke - die Konzentration berechnet wird.

Die Einkopplung des oder der Laserstrahlen kann einerseits durch Durchbohrungen in den Parabolspiegeln erfolgen oder durch Verlängerungen einer der Parabolspiegel an einer Seite, oder auch aus Kombinationen beider Varianten.

Dabei können die Durchbohrungen im äußeren Parabolspiegelbereich oder nahe dem Bereich des Messobjektes realisiert sein.

Im Falle der Anordnung der Einkopplung am äußeren Ende muss der Parabolspiegel mit der größeren Brennweite an einem Ende länger ausgebildet sein oder die Durchbohrung(en) müssen im äußeren Spiegelbereich des Parabolspiegels mit der geringeren Brennweite vorhanden sein. Durch diese Einkopplung wird das erste Auftreffen des oder der Laserstrahlen auf den Parabolspiegel mit der größeren Brennweite gesichert und damit eine schrittweise Ablenkung des oder der Laserstrahlen zum Brennpunktbereich hin erreicht.

Im Falle der Anordnung der Einkopplung im Bereich nahe dem Bereich des Messobjektes muss dass Auftreffen des oder der Laserstrahlen auf den Parabolspiegel mit der kleineren Brennweite realisiert werden und daher weist der Parabolspiegel mit der größeren Brennweite Durchbohrungen auf. Damit wird eine schrittweise Ablenkung des oder der Laserstrahlen zum äußeren Bereich der Parabolspiegel hin erreicht.

Die Auskopplung des oder der Laserstrahlen nach der mehrfachen Reflexion erfolgt vorteilhafterweise durch einen oder mehrere weitere Spiegel, der oder die in den Strahlengang des oder der Laserstrahlen angeordnet werden und den oder die Laserstrahlen aus der Vorrichtung herauslenken. Ebenfalls ist es möglich, die Auskopplung durch ein oder mehrere Löcher in einem der Parabolspiegel oder durch Verlassen des Spiegelbereiches zu realisieren.

Vorteilhaft ist die Einkopplung eines Laserstrahls im Bereich des Messobjektes, wobei der Laserstrahl durch ein Loch im Parabolspiegel mit der größeren Brennweite auf den Parabolspiegel mit der geringeren Brennweite geleitet wird, von dort über das Messobjekt auf den Parabolspiegel mit der größeren Brennweite und von diesem direkt wieder auf den Parabolspiegel mit der geringeren Brennweite geleitet wird. Dann erfolgt die Weiterleitung des Laserstrahles wieder durch das Messobjekt auf den Parabolspiegel mit der größeren Brennweite und von dort direkt wieder auf den Parabolspiegel mit der geringeren Brennweite. Diese Reflexionen werden mehrfach durchgeführt, wobei der Abstand der parallelen Laserstrahlen zwischen den beiden Parabolspiegeln ständig zunimmt. Abschließend erfolgt die Auskopplung, die durch Löcher einem von beiden Parabolspiegeln oder durch die Verlängerung eines der beiden Parabolspiegel realisiert wird. Für die Auskopplung ist es prinzipiell unerheblich, von welchem der beiden Spiegel aus die Auskopplung erfolgt.

Hinsichtlich des Messobjektes können alle Materialien eingesetzt werden, die in dem eingesetzten Frequenzbereich des oder der Laserstrahlen für diese optisch transparent sind. Dies sind in erster Linie Gläser und Kunststoffe.

Gewährleistet sein muss, dass keine Ecken und Kanten am Messobjekt im Bereich des Strahldurchgangs vorhanden sind, da es sonst zu einer Totalreflexion kommt, die zum Abbruch des Verfahrens führen würde. Geringe Abweichungen von einer runden Form des Querschnitts des Messobjektes im Bereich des Strahldurchganges sind möglich, wobei ein möglichst rechtwinkliges Auftreffen des oder der Laserstrahlen auf die Oberfläche des Messobjektes realisiert sein muss.

Auch hinsichtlich der Positionierung des Messobjektes im Bereich des Strahlendurchganges sind geringe Toleranzen möglich. So muss die Länge des Strahldurchgangs durch das Messobjekt gegenüber der Länge des Strahldurchganges durch ein anderes Messobjekt nicht genau gleich sein, um reproduzierbare Untersuchungsergebnisse zu erhalten, da die unterschiedlichen Weglängen in die Auswertung der Ergebnisse Eingang finden. Dies ist besonders wichtig, um die vorliegende Lösung beispielsweise in einem Qualitätsprüfungsprozess an einem Laufband einzusetzen. Die Messobjekte, beispielsweise Halogenlampen, sind auf dem Laufband prinzipiell positioniert und könnten den Strahlbereich beispielsweise mit einem kurzen Halt im Brennpunkt durchlaufen. Dabei kann die genaue Position der einzelnen Halogenlampen in allen drei Raumrichtungen beispielsweise durch leichte Neigung oder durch einen tieferen Sitz auf dem Band unterschiedlich sein. Dies hat im Wesentlichen keine Auswirkungen auf das Messergebniss.

Einsetzbar ist die erfindungsgemäße Lösung in zahlreichen Industriezweigen, in denen gasdurchflossene Körper eine Rolle spielen, wie beispielsweise die chemische Industrie, die Bio-Pharmaindustrie, die Halbleiterindustrie und die Nahrungs- und Genussmittelindustrie. Die gasdurchflossenen Körper können dabei Flaschen, Ampullen, Lampen oder Rohrleitungen sein.

Im Weiteren wird die Erfindung an einem Ausführungsbeispiel näher erläutert.

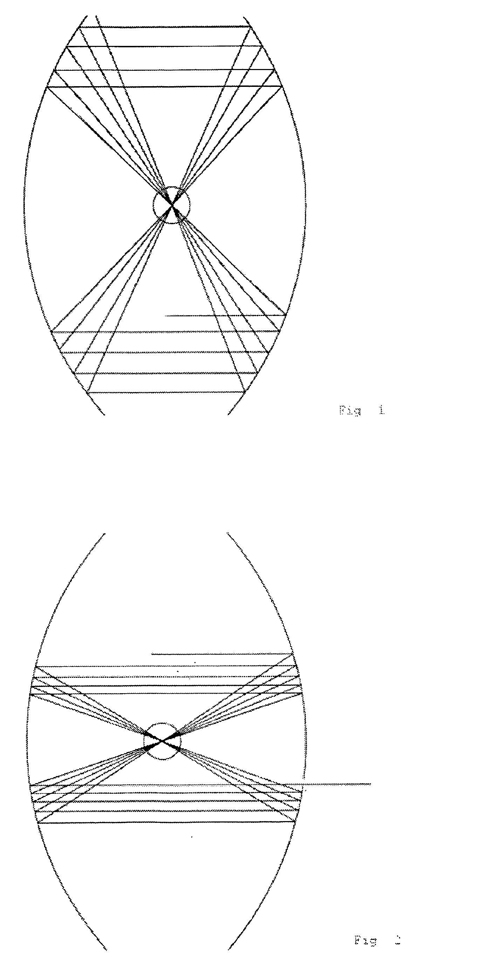

Dabei zeigt
- Fig. 1: eine Prinzipskizze der erfindungsgemäßen Vorrichtung mit einem Strahlengang bei Einkopplung im äußeren Bereich
und
- Fig. 2: eine Prinzipskizze der erfindungsgemäßen Vorrichtung mit einem Strahlengang bei Einkopplung im Messobjektbereich

### Beispiel

Zwei parabolische Kupferparabolspiegel von 230 mm Länge sind mit ihren konkaven Bereichen zueinandergewandt angeordnet. Der rechte Parabolspiegel weist dabei eine Brennweite von 75 mm und der linke Parabolspiegel eine Brennweite von 78,5 mm auf. Im rechten Parabolspiegel wird außerhalb des Brennpunktbereiches am äußeren Rand der Laserstrahl eingekoppelt.

Im Brennpunkt beider Parabolspiegel ist ein Quarzglasrohr angeordnet. Das Quarzglasrohr (Wanddicke; 1 mm) weist einen nahezu runden Querschnitt mit einem Durchmesser von 15 mm auf. Die Konzentration von Ammoniak in Stickstoff im Inneren des Quarzglasrohres ist zu ermitteln.

Von einer Laserdiode hinter dem rechten Parabolspiegel wird ein Laserstrahl mit einer Frequenz von 1,54 µm ausgesandt und auf den linken Parabolspiegel geleitet. Dann trifft er auf die Spiegelfläche des linken Parabolspiegels und wird durch den Brennpunkt auf den rechten Parabolspiegel geleitet. Von dort wird der Laserstrahl auf den linken Parabolspiegel reflektiert und durch den Brennpunkt wieder auf den rechten Parabolspiegel geleitet. Der Laserstrahl wird dann wieder auf den linken Parabolspiegel reflektiert und die angeführte Verfahrensweise viermal wiederholt. Dabei werden die Abstände zwischen den parallelen Laserstrahlen zwischen den Parabolspiegeln immer kleiner bis der Laserstrahl über einen Spiegel ausgekoppelt wird und auf einen Messwertaufnehmer in Form eines Spektrometers trifft. Hier wird die durch das Gas verursachte Absorption aufgezeichnet und in einen Konzentrationswert umgerechnet. Dabei konnte eine Ammoniak-Konzentration von 100 ppm detektiert werden.

## Patentansprüche

1. Verfahren zur Untersuchung von Gasen oder Gasgemischen mittels Laserdiodenspektroskopie, bei dem ein oder mehrere Laserstrahlen auf einen mindestens ersten Parabolspiegel mit einer ersten Brennweite, geführt wird, von dort über den gemeinsamen Brennpunkt mit einem mindestens zweiten Parabolspiegel mit einer zweiten Brennweite, welche sich von der ersten Brennweite unterscheidet durch ein Messobjekt zu diesem mindestens zweiten Parabolspiegel geführt und von dort wieder auf den mindestens ersten Parabolspiegel zurückgeführt werden und diese Reflexionen zur Realisierung eines langen optischen Weges durch das Gas oder Gasgemisch mehrfach durchgeführt werden, bis der oder die reflektierten Laserstrahlen aus dem Bereich zwischen den beiden Parabolspiegeln heraus zu einer Vorrichtung mindestens zur Messung des oder der mehrfach reflektierten Laserstrahlen geführt werden, wobei das Messobjekt einen runden Querschnitt mindestens im Bereich des Strahlendurchganges aufweist, wobei ein möglichst rechtwinkliges Auftreffen des oder der Laserstrahlen auf die Messobjektoberfläche realisiert ist, und wobei die Messwerte anschließend ausgewertet werden, und wobei sich in dem Messobjekt das zu untersuchende Gas oder Gasgemisch befindet, wobei der oder die Strahlen im Messobjekt ausschließlich durch das zu untersuchende Gas oder Gasgemisch geführt werden und der Brennpunkt der mindestens zwei Parabolspiegel innerhalb des Messobjektes und des zu untersuchenden Gases oder Gasgemisches angeordnet wird, **dadurch gekennzeichnet, dass** die Eintritts- und Austrittspunkte der Strahlen durch das Messobjekt den Durchmesser des Messobjektes markieren und wobei der Durchmesser in dieser Ebene der Strahlen den runden Querschnitt definiert.

2. Verfahren nach Anspruch 1, bei dem ein oder mehrere Laserstrahlen mit einer Bandbreite der Frequenz zwischen 0,6 µm und 2,5 µm eingesetzt werden.

3. Verfahren nach Anspruch 1, bei dem ein langer optischer Weg des oder der reflektierten Laserstrahlen durch das Gas oder Gasgemisch eingestellt wird.

4. Verfahren nach Anspruch 1, bei dem der oder die aus der Vorrichtung austretenden Laserstrahlen in ein Spektrometer geführt werden, in dem der oder die Laserstrahlen gemessen und die Messwerte zur Auswertung weitergeleitet werden.

5. Verfahren nach Anspruch 1, bei dem ein rechtwinkliges Auftreffen des oder der Laserstrahlen auf die Oberflächen des Messobjektes realisiert wird.

6. Vorrichtung zur Untersuchung von Gasen oder Gasgemischen mittels Laserdiodenspektroskopie, bestehend aus einer Laserdiode, aus mindestens zwei Parabolspiegeln mit unterschiedlichen Brennweiten, aus einem Messobjekt mit einem mindestens im Bereich des Strahldurchganges runden Querschnitt, zur Realisierung eines möglichst rechtwinkligen Auftreffens des oder der Laserstrahlen auf die Oberflächen des Messobjektes, und das Messobjekt von einem Gas oder Gasgemisch durchströmt ist, aus mindestens einem Messwertaufnehmer und einer Vorrichtung zur Auswertung der Messwerte, wobei die mindestens zwei Parabolspiegel so angeordnet sind, dass sie einen gemeinsamen Brennpunkt aufweisen, wobei der Brennpunkt der mindestens zwei Parabolspiegel innerhalb des Gases oder Gasgemisches im Messobjekt angeordnet ist und das Messobjekt aus einem für Laserlicht transparenten Material besteht, **dadurch gekennzeichnet, dass** die Eintritts- und Austrittspunkte der Strahlen durch das Messobjekt den Durchmesser des Messobjektes markieren und wobei der Durchmesser in dieser Ebene der Strahlen den runden Querschnitt definiert.

7. Vorrichtung nach Anspruch 6, bei der der oder die Laserstrahlen aus einem Frequenzbereich zwischen 0,6 µm und 2,5 µm ausgewählt sind.

8. Vorrichtung nach Anspruch 6, bei der mindestens der Reflexionsbereich der Parabolspiegel aus Kupfer oder Gold besteht oder damit beschichtet ist.

9. Vorrichtung nach Anspruch 6, bei dem die Parabolspiegel zur Einkopplung des oder der Laserstrahlen eine oder mehrere Durchbohrungen aufweisen.

10. Vorrichtung nach Anspruch 9, bei dem die Einkopplung des oder der Laserstrahlen mittels Durchbohrungen im äußeren Parabolspiegelbereich oder nahe dem Messobjektbereich realisiert ist.

11. Vorrichtung nach Anspruch 6, bei dem der Parabolspiegel mit der größeren Brennweite an einem Ende länger ausgebildet ist, als der andere Parabolspiegel.

12. Vorrichtung nach Anspruch 9, bei dem der Parabolspiegel mit der größeren Brennweite die Durchbohrung oder Durchbohrungen im inneren Spiegelbereich nahe dem Messobjektbereich aufweist.

13. Vorrichtung nach Anspruch 9, bei dem der Parabolspiegel mit der kleineren Brennweite die Durchbohrung oder Durchbohrungen im äußeren Bereich aufweist.

14. Vorrichtung nach Anspruch 6, bei der die Abweichung der Brennweiten der mindestens zwei Parabolspiegel im Bereich von 0,1 bis 50 mm liegt.

15. Vorrichtung nach Anspruch 6, bei der die Auslenkung des oder der Laserstrahlen aus dem Bereich zwischen den Parabolspiegeln durch einen oder mehrere weitere Spiegel oder durch ein oder mehrere Löcher im äußeren Bereich der Parabolspiegel oder im Bereich nahe des Brennpunktes der Spiegel realisiert ist.

16. Vorrichtung nach Anspruch 6, bei der das Messobjekt aus Glas oder Kunststoff besteht.

17. Vorrichtung nach Anspruch 6, bei der ein rechtwinkliges Auftreffen des oder der Laserstrahlen auf die Messobjektoberfläche realisiert ist.

18. Vorrichtung nach Anspruch 6, bei der der Messwertaufnehmer ein Spektrometer ist.

## Claims

1. Method for examining gases or gas mixtures using laser diode spectroscopy, in which one or more laser beams are guided onto an at least first parabolic mirror with a first focal length, from there via the focal point which is shared by an at least second parabolic mirror with a second focal length, which differs from the first focal length, through a measurement object to said at least second parabolic mirror and are guided back again from there onto the at least first parabolic mirror and, in order to implement a long optical path through the gas or gas mixture, these reflections are effected a number of times until the reflected laser beam or laser beams is or are guided out of the region between the two parabolic mirrors to an apparatus at least for measuring the repeatedly reflected laser beam or laser beams, wherein the measurement object has a round cross section at least in the region of the beam through-passage, wherein the laser beam or laser beams strikes or strike the measurement object surface substantially perpendicularly, and wherein the measurement values are subsequently evaluated, and wherein the gas or gas mixture to be examined are located inside the measurement object, wherein the beam or beams in the measurement object is or are guided exclusively through the gas or gas mixture to be examined and the focal point of the at least two parabolic mirrors is arranged inside the measurement object and the gas or gas mixture to be examined, **characterized in that** the entry and exit points of the beams through the measurement object mark the diameter of the measurement object, wherein the diameter in this plane of the beams defines the round cross section.

2. Method according Claim 1, in which one or more laser beams with a band width of the frequency between 0.6 µm and 2.5 µm are used.

3. Method according to Claim 1, in which a long optical path of the reflected laser beam or laser beams through the gas or gas mixture is set.

4. Method according to Claim 1, in which the laser beam or laser beams which exits or exit the apparatus are guided into a spectrometer, in which the laser beam or laser beams is or are measured and the measurement values are passed on for evaluation.

5. Method according to Claim 1, in which the laser beam or laser beams strike the surfaces of the measurement object perpendicularly.

6. Apparatus for examining gases or gas mixtures using laser diode spectroscopy, consisting of a laser diode, of at least two parabolic mirrors with different focal lengths, of a measurement object with a cross section which is round at least in the region of the beam through-passage, for achieving that the laser beam or laser beams strikes or strike the surfaces of the measurement object substantially perpendicularly, wherein a gas or gas mixture flows through the measurement object, of at least one measurement value recorder and an apparatus for evaluating the measurement values, wherein the at least two parabolic mirrors are arranged such that they have a shared focal point, with the focal point of the at least two parabolic mirrors being arranged within the gas or gas mixture in the measurement object and the measurement object consisting of a material which is transparent for laser light, **characterized in that** the entry and exit points of the beams through the measurement object mark the diameter of the measurement object, wherein the diameter in this plane of the beams defines the round cross section.

7. Apparatus according to Claim 6, in which the laser beam or laser beams is or are selected from a frequency range between 0.6 µm and 2.5 µm.

8. Apparatus according to Claim 6, in which at least the reflection region of the parabolic mirrors consists of copper or gold or is coated therewith.

9. Apparatus according to Claim 6, in which the parabolic mirrors have one or more through-bores for coupling in the laser beam or laser beams.

10. Apparatus according to Claim 9, in which the laser beam or laser beams is or are coupled in using through-bores in the exterior parabolic mirror region or near the measurement object region.

11. Apparatus according to Claim 6, in which the parabolic mirror with the larger focal length is configured such that it is longer at one end than the other parabolic mirror.

12. Apparatus according to Claim 9, in which the parabolic mirror with the larger focal length has the through-bore or through-bores in the interior mirror region near the measurement object region.

13. Apparatus according to Claim 9, in which the parabolic mirror with the smaller focal length has the through-bore or through-bores in the exterior region.

14. Apparatus according to Claim 6, in which the deviation of the focal lengths of the at least two parabolic mirrors is in the range of 0.1 to 50 mm.

15. Apparatus according to Claim 6, in which the laser beam or laser beams is or are deflected out of the region between the parabolic mirrors by way of one or more further mirrors or by way of one or more holes in the exterior region of the parabolic mirrors or in the region near the focal point of the mirrors.

16. Apparatus according to Claim 6, in which the measurement object consists of glass or plastic.

17. Apparatus according to Claim 6, in which the laser beam or laser beams strikes or strike the measurement object surface perpendicularly.

18. Apparatus according to Claim 6, in which the measurement value recorder is a spectrometer.

## Revendications

1. Procédé d'analyse de gaz ou de mélanges de gaz par spectroscopie à diode laser, dans lequel un ou plusieurs faisceaux laser sont amenés sur au moins un premier miroir parabolique qui présente une première distance focale et de là, par le point focal commun avec celui d'au moins un deuxième miroir parabolique qui présente une deuxième distance focale différente de la première distance focale, vers ce ou ces deuxièmes miroirs paraboliques après avoir traversé un objet de mesure, pour être ensuite renvoyés sur le ou les premiers miroirs paraboliques, ces réflexions étant exécutées plusieurs fois pour obtenir un long parcours optique à travers le gaz ou le mélange de gaz jusqu'à ce que le ou les faisceaux laser réfléchis provenant de la zone située entre les deux miroirs paraboliques soient amenés à un dispositif qui sert au moins à mesurer le ou les faisceaux laser réfléchis plusieurs fois,
l'objet de mesure présentant une section transversale circulaire au moins dans sa partie traversée par les faisceaux,
le ou les faisceaux laser étant amenés à être incidents de manière aussi perpendiculaire que possible sur la surface de l'objet de mesure,
les valeurs de mesure étant ensuite évaluées,
le gaz ou le mélange de gaz à analyser étant situés dans l'objet de mesure,
le ou les faisceaux étant amenés dans l'objet de mesure exclusivement à travers le gaz ou le mélange de gaz à analyser et le point focal des deux ou plusieurs miroirs paraboliques étant situé à l'intérieur de l'objet de mesure et du gaz ou du mélange de gaz à analyser,
**caractérisé en ce que**
les points d'entrée et de sortie des faisceaux qui traversent l'objet de mesure marquent le diamètre de l'objet de mesure,
le diamètre des faisceaux dans ce plan définissant la section transversale circulaire.

2. Procédé selon la revendication 1 qui utilise un ou plusieurs faisceaux laser dont la largeur de bande de fréquence est comprise entre 0,6 µm et 2,5 µm.

3. Procédé selon la revendication 1, qui établit un long parcours optique du ou des faisceaux laser réfléchis à travers le gaz ou le mélange de gaz.

4. Procédé selon la revendication 1, dans lequel le ou les faisceaux laser qui sortent du dispositif sont amenés dans un spectromètre dans lequel le ou les faisceaux laser sont mesurés et en ce que les valeurs de mesure sont transmises à l'évaluation.

5. Procédé selon la revendication 1, dans lequel le ou les faisceaux laser sont incidents perpendiculairement sur les surfaces de l'objet de mesure.

6. Dispositif d'analyse de gaz ou de mélange de gaz par spectroscopie par diode laser, constitué
d'une diode laser,
d'au moins deux miroirs paraboliques de longueurs focales différentes,
d'un objet de mesure qui présente une section transversale circulaire au moins dans la zone traversée par les faisceaux, en vue d'obtenir une incidence aussi perpendiculaire que possible du ou des faisceaux laser sur les surfaces de l'objet de mesure, l'objet de mesure étant traversé par un gaz ou un mélange de gaz,
d'au moins un enregistreur de valeurs de mesure et
d'un dispositif d'évaluation des valeurs de mesure,
les deux ou plusieurs miroirs paraboliques étant disposés de telle sorte qu'ils présentent un point focal commun, le point focal des deux ou plusieurs miroirs paraboliques étant situé à l'intérieur du gaz ou du mélange de gaz présent dans l'objet de mesure et l'objet de mesure étant constitué d'un matériau transparent à la lumière laser,
**caractérisé en ce que**
les points d'entrée et de sortie des faisceaux qui traversent l'objet de mesure marquent le diamètre de l'objet de mesure,
le diamètre des faisceaux dans ce plan définissant la section transversale circulaire.

7. Dispositif selon la revendication 6, dans lequel le ou les faisceaux laser sont sélectionnés dans une plage de fréquence comprise entre 0,6 µm et 2,5 µm.

8. Dispositif selon la revendication 6, dans lequel au moins la partie réfléchissante des miroirs paraboliques est constituée de cuivre ou d'or ou en est revêtue.

9. Dispositif selon la revendication 6, dans lequel les miroirs paraboliques présentent une ou plusieurs perforations permettant l'injection du ou des faisceaux laser.

10. Dispositif selon la revendication 9, dans lequel l'injection du ou des faisceaux laser est réalisée au moyen de perforations ménagées dans la partie extérieure des miroirs paraboliques ou à proximité de la zone occupée par l'objet de mesure.

11. Dispositif selon la revendication 6, dans lequel le miroir parabolique qui présente la plus grande longueur focale est plus long à une extrémité que l'autre miroir parabolique.

12. Dispositif selon la revendication 9, dans lequel le miroir parabolique qui présente la plus grande longueur focale présente l'alésage ou les alésages dans la partie intérieure du miroir à proximité de la zone occupée par l'objet de mesure.

13. Dispositif selon la revendication 9, dans lequel le miroir parabolique qui présente la petite longueur focale présente l'alésage ou les alésages dans sa partie extérieure.

14. Dispositif selon la revendication 6, dans lequel l'écart entre les distances focales des deux ou plusieurs miroirs paraboliques est compris dans la plage de 0,1 à 50 mm.

15. Dispositif selon la revendication 6, dans lequel la déviation du ou des faisceaux laser hors de la partie située entre les miroirs paraboliques est réalisée par un ou plusieurs autres miroirs ou par un ou plusieurs trous ménagés dans la partie extérieure des miroirs paraboliques ou dans la partie proche du point focal des miroirs.

16. Dispositif selon la revendication 6, dans lequel l'objet de mesure est constitué de verre ou de matière synthétique.

17. Dispositif selon la revendication 6, dans lequel le ou les faisceaux laser sont amenés à être incidents perpendiculairement sur la surface de l'objet de mesure.

18. Dispositif selon la revendication 6, dans lequel l'enregistreur de mesure est un spectromètre.
